# EUROPEAN PATENT APPLICATION

(11) **EP 4 617 489 A1**
(43) Date of publication of application: **17.09.2025**
(21) Application number: 24382285.5
(22) Date of filing: 15.03.2024
(51) Int. Cl.: F03D 13/20, F03D 13/40, E04H 12/00

(54) **HYBRID WIND TURBINE TOWER**

(71) Applicant: Nordex Energy Spain, S.A.U., 31395 Barasoain (Navarra) (ES)
(72) Inventor: Arlabán Gabeiras, Teresa, 31395 BARASOAIN (ES)
(74) Representative: Pons IP

(57) **Abstract**

The object of the invention is a hybrid wind turbine tower which reduces the number of connections between sections, so optimizing the design, also avoiding the concentration of stresses along the height of the tower and reducing the costs of transportation.

## Description

### OBJECT OF THE INVENTION

The object of the invention is a hybrid wind turbine tower which reduces the number of connections between sections, so optimizing the design, also avoiding the concentration of stresses along the height of the tower and reducing the costs of transportation.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those for the production of steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

The design of wind turbine components and the design of the connections between them once placed, should take into account the loads they will have to bear throughout their useful life to ensure the proper functioning thereof. In particular, the connections between different concrete sections of the tower or between an upper concrete section and an adapter disposed above the upper concrete section for the transition between the concrete sections and the steel sections in the case of hybrid towers or for the transition between the concrete sections and the nacelle of the wind turbine in the case of full concrete towers, are adapted to withstand the loads they will have to bear throughout their useful life, such as gravitational loads, assembly loads, inertial loads, aerodynamic loads, operational loads and other loads that depend on the location where the wind turbine is to be installed, such as earthquakes.

However, this state-of-the-art geometry gives rise to undesirable local effects in the concrete segments, such as:
- Local bending moments in transition region from the central part and the connection area of the concrete part that increase concrete compressive stresses and that require additional reinforcement for tensile forces at the beginning of the connection area; and
- Circumferential compressive and tensile stresses close to thickness changes.

The present invention solves the problems described above by providing a concrete segment of an upper section of a wind turbine tower which minimizes the undesirable local effects in the connection area between the upper concrete section and the adapter.

### DESCRIPTION OF THE INVENTION

The invention relates to a hybrid wind turbine tower which reduces the number of connections between sections, so optimizing the design, also avoiding the concentration of stresses along the height of the tower and reducing the costs of transportation.
The hybrid tower of a wind turbine comprises:- at least one first tower section; and
- at least one second tower section disposed above the at least one first tower section;

wherein the at least one first tower section is a concrete tower section and the at least one second tower section is a steel tower section;
wherein the concrete tower section comprises a first height and the steel tower section comprises a second height; and
wherein a ratio of the second height to the first height is 6 or less.

Optionally, the ratio of the second height to the first height is 5 or less.

Optionally, the ratio of the second height to the first height is 4 or less.

In this way, the number of connections between sections of the tower is reduced for achieving a higher height in the hybrid tower, since it is reached a compromise solution between each one of the number of sections of concrete and steel, and the number of connections of the whole hybrid tower.

Optionally, the first height is between 6m and 15m, and the second height is between 25m and 36m. In this way, higher steel sections can be disposed above shorter concrete sections thus guaranteeing that the desired height of the hybrid tower is achieved.

Preferably, the first height is between 8m and 12m, and the second height is between 28m and 33m.

Optionally, the tower comprises a first number of sections of the type of the at least one first tower section, and a second number of sections of the type of the at least one second tower section, wherein a ratio of the first number of sections to the second number of sections is between 2 and 4.

In this way, a higher number of sections of the concrete type than the number of sections of the steel type allows to precast these sections in a location near the base of the tower, reducing the transportation costs of the steel sections.

Optionally, the tower further comprises an adapter disposed between the at least one first tower section and the at least one second tower section.

Optionally, the adapter comprises a third height.

Preferably, a ratio of the first height to the third height is between 4 and 10.

Preferably, a ratio of the second height to the third height is between 16 and 24.

Optionally, the tower further comprises:
- at least two first tower sections being concrete tower sections; and
- at least two second tower sections disposed above the two first tower sections being steel tower sections;

wherein the at least two first tower sections comprise the concrete tower section comprising the first height and an additional concrete tower section comprising a fourth height, wherein the first height is greater than the fourth height or vice versa;
wherein the at least two second tower sections comprise the steel tower section comprising the second height and an additional steel tower section comprising a fifth height, wherein the second height is greater than the fifth height or vice versa; and
wherein a ratio of the greater in height between the steel tower section and the additional steel tower section to the smaller in height between the concrete tower section and the additional concrete tower section is 6 or less.

In this way, the relationship between the higher steel section and the smaller concrete section never overcomes a ratio of 6, independently of the number of steel sections and the number of concrete sections.

Optionally, a ratio of the smaller in height between the steel tower section and the additional steel tower section to the greater in height of the greater in height between the concrete tower section and the additional concrete tower section is 4 or less, preferably 3 or less, more preferably 2 or less.

Thus, the relationship between the smaller steel section and the higher concrete section never overcomes a ratio of 4, independently of the number of steel sections and the number of concrete sections.

The invention also relates to a transportation system for assembling a wind turbine comprising a tower as described above, wherein the transportation system comprises:
- first transportation means configured to transport at least one first tower section being a concrete tower section, the first transportation means comprising a loading platform; and
- second transportation means configured to transport at least one second tower section being a steel tower section, the second transportation means comprising a loading platform;

wherein the loading platform of the first transportation means comprises a first load length and the loading platform of the second transportation means comprises a second load length; and
wherein a ratio of the second load length to the first load length is 6 or less.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:
Figure 1 shows a first embodiment of the hybrid tower of a wind turbine according to the invention.
Figure 2 shows the first transportation means of the transportation system according to the invention.
Figure 3 shows the second transportation means of the transportation system according to the invention.

### PREFERRED EMBODIMENT OF THE INVENTION

The following is a detailed description of the hybrid tower of a wind turbine of the invention.

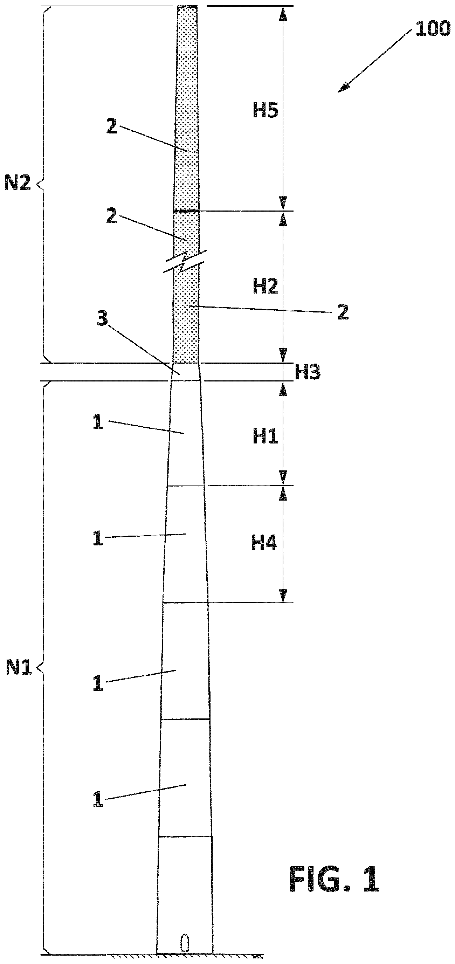

In a first preferred embodiment shown in Figure 1, the hybrid tower (100) comprises:
- at least one first tower section (1); and
- at least one second tower section (2) disposed above the at least one first tower section (1);

wherein the at least one first tower section (1) is a concrete tower section (1) and the at least one second tower section (2) is a steel tower section (2);
wherein the concrete tower section (1) comprises a first height (H1) and the steel tower section (2) comprises a second height (H2); and
wherein a ratio of the second height (H2) to the first height (H1) is 6 or less, preferably between 1,5 and 6, more preferably between 1,5 and 4.

Preferably, the first height (H1) is between 6m and 15m, and the second height (H2) is between 25m and 36m, more preferably, the first height (H1) is between 8m and 12m, and the second height (H2) is between 28m and 33m, more preferably, the first height (H1) is 10m, and the second height (H2) is 30m.
Optionally, the tower (100) comprises a first number of sections (N1) of the type of the at least one first tower section (1), and a second number of sections (N2) of the type of the at least one second tower section (2), wherein a ratio of the first number of sections (N1) to the second number of sections (N2) is between 2 and 4.

In this way, a higher number of sections of the concrete type than the number of sections of the steel type allows to precast these sections in a location near the base of the tower, reducing the transportation costs of the steel sections.

Optionally, the tower (100) further comprises an adapter (3) disposed between the at least one first tower section (1) and the at least one second tower section (2), wherein the adapter (3) comprises a third height (H3), wherein a ratio of the first height (H1) to the third height (H3) is between 4 and 10 and/or a ratio of the second height (H2) to the third height (H3) is between 16 and 24.

Optionally, for a second embodiment shown in Figure 1, the tower (100) further comprises:
- at least two first tower sections (1) being concrete tower sections (1); and
- at least two second tower sections (2) disposed above the two first tower sections (1) being steel tower sections (2);

wherein the at least two first tower sections (1) comprise the concrete tower section comprising the first height (H1) and an additional concrete tower section comprising a fourth height (H4), wherein the first height (H1) is greater than the fourth height (H4) or vice versa;
wherein the at least two second tower sections (2) comprise the steel tower section comprising the second height (H2) and an additional steel tower section comprising a fifth height (H5), wherein the second height (H2) is greater than the fifth height (H5) or vice versa; and
wherein a ratio of the greater in height between the steel tower section and the additional steel tower section to the smaller in height between the concrete tower section and the additional concrete tower section is 6 or less, preferably 5 or less, and preferably 4 or less.

In this second embodiment, a ratio of the smaller in height between the steel tower section and the additional steel tower section to the greater in height of the greater in height between the concrete tower section and the additional concrete tower section is 4 or less, preferably 3 or less, more preferably 2 or less.

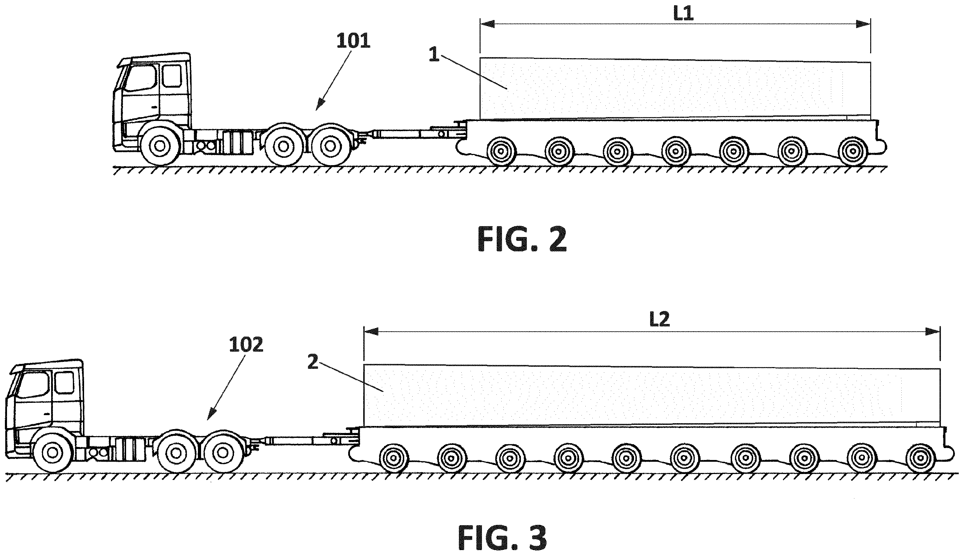

Figures 2 and 3 show a transportation system for assembling a wind turbine comprising any one of the towers described above, wherein the transportation system comprises:
- first transportation means (101) configured to transport at least one first tower section (1) being a concrete tower section (1), the first transportation means (101) comprising a loading platform; and
- second transportation means (102) configured to transport at least one second tower section (2) being a steel tower section (2), the second transportation means (102) comprising a loading platform;

wherein the loading platform of the first transportation means (101) comprises a first load length (L1) and the loading platform of the second transportation means (102) comprises a second load length (L2); and
wherein a ratio of the second load length (L2) to the first load length (L1) is 6 or less, preferably 5 or less, preferably 4 or less.

## Claims

1. Hybrid tower (100) of a wind turbine comprising:
- at least one first tower section (1); and
- at least one second tower section (2) disposed above the at least one first tower section (1);
wherein the at least one first tower section (1) is a concrete tower section (1) and the at least one second tower section (2) is a steel tower section (2);
wherein the concrete tower section (1) comprises a first height (H1) and the steel tower section (2) comprises a second height (H2); and
wherein a ratio of the second height (H2) to the first height (H1) is 6 or less.

2. The tower (100) of claim 1, wherein the ratio of the second height (H2) to the first height (H1) is 5 or less.

3. The tower (100) of claim 1, wherein the ratio of the second height (H2) to the first height (H1) is 4 or less.

4. The tower (100) of claim 1, wherein the first height (H1) is between 6m and 15m, and the second height (H2) is between 25m and 36m.

5. The tower (100) of claim 4, wherein the first height (H1) is between 8m and 12m, and the second height (H2) is between 28m and 33m.

6. The tower (100) of any of preceding claims, comprising a first number of sections (N1) of the type of the at least one first tower section (1), and a second number of sections (N2) of the type of the at least one second tower section (2), wherein a ratio of the first number of sections (N1) to the second number of sections (N2) is between 2 and 4.

7. The tower (100) of any of previous claims, further comprising an adapter (3) disposed between the at least one first tower section (1) and the at least one second tower section (2), wherein the adapter (3) comprises a third height (H3), wherein a ratio of the first height (H1) to the third height (H3) is between 4 and 10.

8. The tower (100) of any of claims 1 to 6, further comprising an adapter (3) disposed between the at least one first tower section (1) and the at least one second tower section (2), wherein the adapter (3) comprises a third height (H3), wherein a ratio of the second height (H2) to the third height (H3) is between 16 and 24.

9. The tower (100) of any of previous claims comprising:
- at least two first tower sections (1) being concrete tower sections (1); and
- at least two second tower sections (2) disposed above the two first tower sections (1) being steel tower sections (2);
wherein the at least two first tower sections (1) comprise the concrete tower section comprising the first height (H1) and an additional concrete tower section comprising a fourth height (H4), wherein the first height (H1) is greater than the fourth height (H4) or vice versa;
wherein the at least two second tower sections (2) comprise the steel tower section comprising the second height (H2) and an additional steel tower section comprising a fifth height (H5), wherein the second height (H2) is greater than the fifth height (H5) or vice versa; and
wherein a ratio of the greater in height between the steel tower section and the additional steel tower section to the smaller in height between the concrete tower section and the additional concrete tower section is 6 or less.

10. The tower (100) of claim 9, wherein a ratio of the smaller in height between the steel tower section and the additional steel tower section to the greater in height of the greater in height between the concrete tower section and the additional concrete tower section is 4 or less, preferably 3 or less, more preferably 2 or less,

11. Transportation system for assembling a wind turbine comprising a tower (100) of any of previous claims, wherein the transportation system comprises:
- first transportation means (101) configured to transport at least one first tower section (1) being a concrete tower section (1), the first transportation means (101) comprising a loading platform; and
- second transportation means (102) configured to transport at least one second tower section (2) being a steel tower section (2), the second transportation means (102) comprising a loading platform;
wherein the loading platform of the first transportation means (101) comprises a first load length (L1) and the loading platform of the second transportation means (102) comprises a second load length (L2); and
wherein a ratio of the second load length (L2) to the first load length (L1) is 6 or less.
